# EUROPÄISCHE PATENTSCHRIFT

(11) **EP 2 665 778 B1**
(45) Veröffentlichungstag und Bekanntmachung des Hinweises auf die Patenterteilung: **15.04.2015**
(21) Anmeldenummer: 12701333.2
(22) Anmeldetag: 17.01.2012
(51) Int. Cl.: C08L 77/00, C08L 67/03, C08L 77/02, C08L 67/00, C08K 3/04

(54) **THERMOPLASTISCHE FORMMASSE**
THERMOPLASTIC MOULDING COMPOSITION
MATIÈRE À MOULER THERMOPLASTIQUE

(30) Priorität: 18.01.2011 EP 11151220
(43) Veröffentlichungstag der Anmeldung: 27.11.2013
(73) Patentinhaber: BASF SE, 67056 Ludwigshafen (DE)
(72) Erfinder: SCHNEIDER, Cecile, 67227 Frankenthal (DE); YANG, Xin, 201204 Shanghai (CN); KUJAT, Christof, 67434 Neustadt (DE); WEBER, Martin, 67487 Maikammer (DE); JAIN, Sachin, 425001 Jalgaon MH (IN); PARK, Hye Jin, 67063 Ludwigshafen (DE)
(86) Internationale Anmeldenummer: PCT/EP2012/050628
(87) Internationale Veröffentlichungsnummer: WO 2012/098109

(56) Entgegenhaltungen:
- WO-A2-2009/077492
- US-A1- 2007 060 719

## Beschreibung

Die Erfindung betrifft eine thermoplastische Formmasse, die mindestens ein thermoplastisches Matrixpolymer, mindestens ein hoch- oder hyperverzweigtes Polymer und leitfähige Kohlenstoff-Füllstoffe enthält.

Der Einsatz von Kohlenstoff-Füllstoffen in Matrixpolymeren in Kombination mit hoch- oder hyperverzweigten Polymeren ist an sich bekannt.

Die WO2009/077492 offenbart Polyamid-Monokomposite.

Die WO 2009/115536 betrifft Polyamid-Nanokomposite mit hyperverzweigten Polyethyleniminen. Die beschriebenen thermoplastischen Formmassen enthalten mindestens ein thermoplastisches Polyamid, mindestens ein hyperverzweigtes Polyethylenimin, mindestens ein amorphes Oxid und/oder Oxidhydrat mindestens eines Metalls oder Halbmetalls mit einem zahlengewichteten mittleren Durchmesser der Primärpartikel von 0,5 bis 20 nm, wobei die Formmassen als Füllstoffe auch Kohlenstoff-Nanoröhren enthalten können. Als Pigmente können Ruß und Graphit mitverwendet werden.

Die hyperverzweigten Polyethylenimine werden zur Verminderung der Schmelzviskosität bei gleichzeitig günstigen mechanischen Eigenschaften eingesetzt.

Die WO 2008/074687 betrifft thermoplastische Formmassen mit verbesserter Duktilität. Die Formmassen enthalten ein teilaromatisches Polyamid, ein Copolymer aus Ethylen, 1-Octen oder 1-Buten oder Propen oder deren Mischungen sowie funktionellen Monomeren, in denen die funktionelle Gruppe ausgewählt ist aus Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen oder deren Mischungen. Die Formmassen können zudem faser- oder teilchenförmige Füllstoffe und hoch- oder hyperverzweigte Polycarbonate oder hoch- oder hyperverzweigte Polyester enthalten. Zudem kann ein elektrisch leitfähiges Additiv mitverwendet werden, das beispielsweise ausgewählt ist aus Carbon-Nanotubes, Graphit oder Leitruß. Auch Pigmente wie Ruß können mitverwendet werden.

Die hoch- oder hyperverzweigten Polycarbonate oder Polyester werden zur Verbesserung der Fließfähigkeit und der Duktilität eingesetzt.

Die EP-A-2 151 415 beschreibt den Einsatz spezieller hyperverzweigter Polymere, die eine Triarylaminstruktur aufweisen, jedoch keine zur Reaktion mit einem Matrixpolymer befähigten funktionellen Gruppen enthalten, als Solubilisator für Kohlenstoff-Nanoröhren. Die so erhaltenen Solubilisate können in Polymerharze eingebracht werden, unter anderem in Polyamidharze oder Polycarbonatharze.

Um in thermoplastischen Matrixpolymeren eine ausreichende Leitfähigkeit zu erreichen, ist üblicherweise der Zusatz hoher Mengen an die Leitfähigkeit verbessernden Füllstoffen, wie Kohlenstoff-Nanoröhren oder Leitfähigkeitsruß notwendig. Hierdurch werden die mechanischen Eigenschaften der thermoplastischen Polymermatrix häufig stark beeinträchtigt. Zudem ist der Einsatz großer Mengen dieser die Leitfähigkeit verbessernder Füllstoffe sehr kostspielig.

Aufgabe der vorliegenden Erfindung ist die Bereitstellung von leitfähige Kohlenstoff-Füllstoffe enthaltenden thermoplastischen Polymerformmassen, die eine verbesserte Leitfähigkeit aufweisen oder in denen unter Erhalt der Leitfähigkeit der Gehalt an Kohlenstoff-Füllstoffen vermindert werden kann.

Die Aufgabe wird erfindungsgemäß gelöst durch eine thermoplastische Formmasse, enthaltend, bezogen auf die thermoplastische Formmasse,
a) mindestens ein thermoplastisches Matrixpolymer, ausgewählt aus Polyamiden, Polyestern, Polyacetalen und Polysulfonen, das auch als Polymerblend vorliegen kann, als Komponente A,
b) 0,1 bis 5 Gew.-% mindestens eines hoch- oder hyperverzweigten Polymers, das funktionelle Gruppen aufweist, die mit dem Matrixpolymer der Komponente A reaktionsfähig sind, als Komponente B,
c) 0,1 bis 15 Gew.-% leitfähige Kohlenstoff-Füllstoffe, ausgewählt aus Kohlenstoff-Nanoröhren, Graphenen, oder Gemischen davon, als Komponente C,
wobei die thermoplastische Formmasse keine amorphen Oxide oder Oxidhydrate mindestens eines Metalls oder Halbmetalls mit einem zahlengewichteten mittleren Durchmesser der Primärpartikel von 0,5 bis 20 nm enthält, und wobei Formmassen ausgenommen sind, die ein teilaromatischen Polyamid und ein Copolymerisat aus Ethylen, 1-Octen oder 1-Buten oder Propylen oder deren Mischungen, sowie funktionellen Monomeren, in denen die funktionelle Gruppe ausgewählt ist aus Carbonsäure, Carbonsäureanhydrid-, Carbonsäureester-, Carbonsäureamid-, Carbonsäureimid-, Amino-, Hydroxyl-, Epoxid-, Urethan-oder Oxazolingruppen, enthalten.

Die Aufgabe wird zudem gelöst durch die Verwendung von hoch- oder hyperverzweigten Polymeren als Komponente B, die funktionelle Gruppen aufweisen, die mit einem Matrixpolymer einer Komponente A reaktionsfähig sind, in einer thermoplastischen Formmasse, die mindestens ein thermoplastisches Matrixpolymer als Komponente A enthält, das ausgewählt ist aus Polyamiden, Polyestern, Polyacetalen und Polysulfonen und auch als Polymerblend vorliegen kann und leitfähige Kohlenstoff-Füllstoffe, ausgewählt aus Kohlenstoff-Nanoröhren, Graphenen, oder Gemischen davon, als Komponente C enthält, zur Erhöhung der Leitfähigkeit der thermoplastischen Formmasse.

Es wurde erfindungsgemäß gefunden, dass die Kombination eines leitfähigen Kohlenstoff-Füllstoffs mit hoch- oder hyperverzweigten Polymeren in thermoplastischen Formmassen zu einem signifikanten Anstieg der elektrischen Leitfähigkeit führt. Hierzu weist das hoch- oder hyperverzweigte Polymer funktionelle Gruppen auf, die mit dem Matrixpolymer reaktionsfähig sind. Die Verbesserung der elektrischen Eigenschaften erlaubt die Formulierung von Materialien, die einen verminderten Gehalt an leitfähigen Füllstoffen aufweisen.

Der Anteil der Komponente B in den erfindungsgemäßen thermoplastischen Formmassen beträgt 0,1 bis 5 Gew.-%, vorzugsweise 0,2 bis 3 Gew.-%, insbesondere 0,3 bis 1,3 Gew.-%.

Die hoch- oder hyperverzweigten Polymere der Komponente B weisen funktionelle Gruppen auf, die mit dem Matrixpolymer der Komponente A reaktionsfähig sind. Dabei sind sie unter den Bedingungen einer Formgebung der thermoplastischen Formmasse reaktionsfähig, beispielsweise beim Verformen der thermoplastischen Formmasse, dem Aufschmelzen der thermoplastischen Formmasse, der Verarbeitung der thermoplastischen Formmasse in einem Extruder oder Kneter oder Presswerkzeug. Dabei erfolgt vorzugsweise bei den Verarbeitungsbedingungen, insbesondere beim Extrudieren, eine Molekulargewichtsänderung, vorzugsweise ein Molekulargewichtsaufbau, beispielsweise sichtbar durch Erhöhung der Schmelze- oder Lösungsviskosität.

Eine thermoplastische Formmasse mit den Komponenten A, B und C ist vorzugsweise reaktiv. Sie wird als reaktiv angesehen, wenn eine wesentliche Änderung des Molekulargewichts oder der Schmelzviskosität oder der Lösungsviskosität nach Vermischen insbesondere der Komponenten A und B beobachtet wird, beispielsweise bei einer Extrusion. Eine Änderung wird als wesentlich angesehen, wenn die Änderung des Messwertes oberhalb der Standardabweichung eines entsprechenden Messwertes liegt.

Das hoch- oder hyperverzweigte Polymer der Komponente B sollte damit auf das Matrixpolymer der Komponente A abgestimmt sein, so dass eine Umsetzung der funktionellen Gruppen möglich ist.

Hyperverzweigt sind Verbindungen, in denen der Verzweigungsgrad, d. h. die Summe aus der mittleren Anzahl von dendritischen Verknüpfungen und terminalen Einheiten dividiert durch die Summe der mittleren Zahl der Gesamtverknüpfungen (dendritische, lineare und terminale Verknüpfungen) multipliziert mit 100, 10 bis 98 %, bevorzugt 25 bis 90 %, besonders bevorzugt 30 bis 80 %, beträgt.

Das Merkmal "hyperverzweigt" bedeutet im Rahmen der vorliegenden Erfindung, dass der Verzweigungsgrad DB (degree of branching) der betreffenden Polymere, der definiert ist als DB (%) = 100 x (T + Z) / (T + Z + L), wobei T die mittlere Anzahl der terminal gebundenen Monomereinheiten, Z die mittlere Anzahl der Verzweigungen bildenden Monomereinheiten und L die mittlere Anzahl der linear gebundenen Monomereinheiten in den Makromolekülen der jeweiligen Stoffe bedeuten, von 10 bis 98 %, bevorzugt von 25 bis 90 % und besonders bevorzugt von 30 bis 80 % beträgt.

Hyperverzweigte Polymere, auch hochverzweigte Polymere genannt, sind von den Dendrimeren zu unterscheiden. Dendrimere sind Polymere mit perfekt symmetrischer Struktur und lassen sich ausgehend von einem zentralen Molekül durch kontrollierte schrittweise Verknüpfung von jeweils zwei oder mehr di- oder mehrfunktionellen Monomeren mit jedem bereits gebundenen Monomer herstellen. Dabei vervielfältigt sich mit jedem Verknüpfungsschritt die Zahl der Monomerendgruppen (und damit der Verknüpfungen), und man erhält Polymere mit baumartigen Strukturen, im Idealfall kugelförmig, deren Äste jeweils exakt dieselbe Anzahl von Monomereinheiten enthalten. Aufgrund dieser perfekten Struktur sind die Polymereigenschaften in vielen Fällen vorteilhaft, beispielsweise beobachtet man eine geringe Viskosität und eine hohe Reaktivität aufgrund der hohen Anzahl funktioneller Gruppen an der Kugeloberfläche. Allerdings wird die Herstellung dadurch verkompliziert, dass bei jedem Verknüpfungsschritt Schutzgruppen eingeführt und wieder entfernt werden müssen und Reinigungsoperationen erforderlich sind, weshalb man Dendrimere üblicherweise nur im Labormaßstab herstellt.

Jedoch kann man mit großtechnischen Verfahren hochverzweigte bzw. hyperverzweigte Polymere herstellen. Der Begriff hyperverzweigt umfasst im Rahmen der vorliegenden Erfindung den Begriff hochverzweigt und wird im Folgenden als beide Begriffe repräsentierend weiterverwendet. Die hyperverzweigten Polymere weisen neben perfekten dendritischen Strukturen auch lineare Polymerketten und ungleiche Polymeräste auf, was jedoch die Polymereigenschaften verglichen zu denen der perfekten Dendrimere nicht wesentlich verschlechtert.

Durch den oben definierten Verzweigungsgrad unterscheiden sich die erfindungsgemäß verwendeten (nicht-dendrimeren) hyperverzweigten Polymere von den Dendrimeren. "Dendrimer" sind im Zusammenhang mit der vorliegenden Erfindung die Polymere dann, wenn ihr Verzweigungsgrad DB = 99,9 - 100 % beträgt. Damit weist ein Dendrimer die maximal mögliche Anzahl an Verzweigungsstellen auf, welche nur durch einen hochsymmetrischen Aufbau erreicht werden kann. Zur Definition des "Degree of Branching" siehe auch H. Frey et al., Acta Polym. 1997, 48, 30. Unter hyperverzweigten Polymeren sind somit im Rahmen dieser Erfindung im Wesentlichen unvernetzte Makromoleküle zu verstehen, die sowohl strukturell als auch molekular uneinheitlich sind.

Im Rahmen der vorliegenden Erfindung kommen vorzugsweise hochfunktionelle hyperverzweigte Polyethylenimine B) zum Einsatz.

Unter einem hochfunktionellen hyperverzweigten Polyethylenimin ist im Rahmen dieser Erfindung ein Produkt zu verstehen, das neben sekundären und tertiären Aminogruppen, die das Polymergerüst bilden, end- oder seitenständig weiterhin im Mittel mindestens drei, bevorzugt mindestens sechs, insbesondere bevorzugt mindestens zehn funktionelle Gruppen aufweist. Bei den funktionellen Gruppen handelt es sich vorzugsweise um primäre Amino-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen hyperverzweigten Polyethylenimine der vorliegenden Erfindung weisen vorzugsweise nicht mehr als 500 end- oder seitenständige funktionelle Gruppen, insbesondere nicht mehr als 100 end- oder seitenständige Gruppen auf.

Unter Polyethyleniminen im Sinne der vorliegenden Erfindung sollen sowohl Homo- als auch Copolymerisate verstanden werden, welche beispielsweise nach den Verfahren in Ullmann's Encyclopedia of Industrial Chemistry, "Aziridines", electronic release (Artikel veröffentlicht am 15.12.2006) oder gemäss WO-A 94/12560 erhältlich sind.

Die Homopolymerisate sind vorzugsweise durch Polymerisation von Ethylenimin (Aziridin) in wässriger oder organischer Lösung in Gegenwart von säureabspaltenden Verbindungen, Säuren oder Lewis-Säuren erhältlich. Derartige Homopolymerisate sind verzweigte Polymere, die in der Regel primäre, sekundäre und tertiäre Aminogruppen im Verhältnis von ca. 30 % zu 40 % zu 30 % enthalten. Die Verteilung der Aminogruppen kann mittels ¹³C-NMR Spektroskopie bestimmt werden.

Als Comonomere werden vorzugsweise Verbindungen eingesetzt, welche mindestens zwei Aminofunktionen aufweisen. Als geeignete Comonomere seien beispielsweise Alkylendiamine mit 2 bis 10 C-Atomen im Alkylenrest genannt, wobei Ethylendiamin und Propylendiamin bevorzugt sind. Weiterhin geeignete Comonomere sind Diethylentriamin, Triethylentetramin, Tetraethylenpentamin, Dipropylentriamin, Tripropylentetramin, Dihexamethylentriamin, Aminopropylethylendiamin und Bisaminopropylethylendiamin.

Polyethylenimine weisen üblicherweise ein mittleres Molekulargewicht (Gewichtsmittel) im Bereich von 100 bis 3.000.000, insbesondere von 800 bis 2.000.000 g/mol auf. Die durch katalysierte Polymerisation von Aziridinen erhaltenen Polyethylenimine weisen dabei üblicherweise ein gewichtsmittleres Molekulargewicht im Bereich von 800 bis 50.000 g/mol, insbesondere von 1.000 bis 30.000 g/mol auf. Höhermolekulare Polyethylenimine sind insbesondere durch Umsetzung der genannten Polyethylenimine mit di-funktionellen Alkylierungsverbindungen wie beispielsweise Chlormethyloxiran oder 1 ,2-Dichlorethan oder durch Ultrafiltration von Polymeren mit einer breiten Molekulargewichtsverteilung, wie zum Beispiel in EP-A-0 873 371 und EP-A-1 177 035 beschrieben, oder durch Vernetzung erhältlich.

Darüber hinaus eignen als Komponente B) vernetzte Polyethylenimine, die durch Reaktion von Polyethyleniminen mit bi- oder polyfunktionellen Vernetzern erhältlich sind, welche als funktionelle Gruppe mindestens eine Halogenhydrin-, Glycidyl-, Aziridin-, Isocyanateinheit oder ein Halogenatom aufweisen. Als Beispiele seien Epichlorhydrin oder Bischlorhydrinether von Polyalkylenglykolen mit 2 bis 100 Ethylenoxid- und/oder Propylenoxid-Einheiten sowie die in der DE-A 19 93 17 20 und US 4 144 123 aufgeführten Verbindungen genannt. Verfahren zur Herstellung von vernetzten Polyethyleniminen sind u. a. aus den o. g. Schriften sowie EP-A 895 521 und EP-A 25515 bekannt. Vernetzte Polyethylenimine weisen üblicherweise ein mittleres Molekulargewicht von mehr als 20.000 g/mol auf.

Weiterhin kommen als Komponente B) gepfropfte Polyethylenimine in Betracht, wobei als Pfropfmittel sämtliche Verbindungen eingesetzt werden können, die mit den Amino- bzw. Iminogruppen der Polyethylenimine reagieren können. Geeignete Pfropfmittel und Verfahren zur Herstellung von gepfropften Polyethyleniminen sind beispielsweise der EP-A 675 914 zu entnehmen.

Ebenso geeignete Polyethylenimine sind amidierte Polymerisate, die üblicherweise durch Umsetzung von Polyethyleniminen mit Carbonsäuren, deren Estern oder Anhydriden, Carbonsäureamiden oder Carbonsäurehalogeniden erhältlich sind. Je nach Anteil der amidierten Stickstoffatome in der Polyethyleniminkette können die amidierten Polymerisate nachträglich mit den genannten Vernetzern vernetzt werden. Vorzugsweise werden hierbei bis zu 30 % der Aminofunktionen amidiert, damit für eine anschliessende Vernetzungsreaktion noch genügend primäre und/oder sekundäre Stickstoffatome zur Verfügung stehen.

Außerdem eignen sich alkoxylierte Polyethylenimine, die beispielsweise durch Umsetzung von Polyethylenimin mit Ethylenoxid und/oder Propylenoxid und/oder Butylenoxid erhältlich sind. Auch derartige alkoxylierte Polymerisate sind anschließend vernetzbar.

Als weitere als Komponente B) geeignete Polyethylenimine seien hydroxylgruppenhaltige Polyethylenimine und amphotere Polyethylenimine (Einbau von anionischen Gruppen) genannt sowie lipophile Polyethylenimine, die in der Regel durch Einbau langkettiger Kohlenwasserstoffreste in die Polymerkette erhalten werden. Verfahren zur Herstellung derartiger Polyethylenimine sind dem Fachmann bekannt, so dass sich weitere Einzelheiten hierzu erübrigen.

Für die Beschreibung geeigneter Polyethylenimine kann auf die WO 2009/115536, insbesondere dort Seiten 8 bis 11, verwiesen werden.

Die Komponente (B) kann als solche oder als Lösung, insbesondere als wässrige Lösung, eingesetzt werden.

Die Komponente B) weist vorzugsweise ein gewichtsmittleres Molekulargewicht, bestimmt durch Lichtstreuung, von 800 bis 50.000 g/mol, besonders bevorzugt von 1000 bis 40.000 g/mol, insbesondere von 1200 bis 30.000 g/mol, auf. Das mittlere Molekulargewicht (Gewichtsmittel) wird vorzugsweise mittels Gelpermeationschromatographie mit Pullulan als Standard in einer wässrigen Lösung (Wasser; 0,02 mol/l Ameisensäure; 0,2 mol/l KCl) bestimmt.

Die Komponente B) weist im Rahmen der vorliegenden Erfindung vorzugsweise eine Glasübergangstemperatur von weniger als 50 °C, besonders bevorzugt weniger als 30 °C und insbesondere weniger als 10°C auf.

Eine nach DIN 53176 bestimmte Aminzahl der Komponente B) im Bereich von 50 bis 1000 mg KOH/g ist günstig. Vorzugsweise weist die Komponente B) eine Aminzahl von 100 bis 900 mg KOH/g nach DIN 53176 auf, ganz bevorzugt von 150 bis 800 mg KOH/g.

Als Komponente B können auch hoch- oder hyperverzweigte Polyetheramine eingesetzt werden. Erfindungsgemäß geeignete Polyetheramine sind beispielsweise beschrieben in WO 2009/077492, dort als Komponente B), siehe dort die Seiten 6 bis 16.

Als Komponente B können die erfindungsgemäßen Formmassen auch ein hoch- oder hyperverzweigtes Polycarbonat enthalten, das eine OH-Zahl von 1 bis 600, vorzugsweise 10 bis 550 und insbesondere 50 bis 550 mg KOH/g Polycarbonat (gemäß DIN 53240, Teil 2) aufweist.

Unter hyperverzweigten Polycarbonaten werden unvernetzte Makromoleküle mit Hydroxyl- und Carbonatgruppen verstanden, die sowohl strukturell als auch molekular uneinheitlich sind. Sie können ausgehend von einem Zentralmolekül analog zu Dendrimeren, jedoch mit uneinheitlicher Kettenlänge der Ester, aufgebaut sein. Sie können auch linear, mit funktionellen Seitengruppen, aufgebaut sein, oder als Kombination beider Extreme, lineare und verzweigte Molekülteile aufweisen.

Erfindungsgemäß geeignete hoch- oder hyperverzweigte Polycarbonate oder Polyester sind beispielsweise in der WO 2008/074687 beschrieben, siehe dort die Seiten 9 bis 19 für die Polycarbonate und Seiten 19 bis 29 für hyperverzweigte Polyester.

Hyperverzweigte Polyester enthalten im Unterschied zu den Polycarbonaten neben Hydroxylgruppen Carboxylgruppen.

Die in WO 2008/074687 und WO 2009/115536 beschriebenen thermoplastischen Formmassen, die leitfähige Kohlenstoff-Füllstoffe aufweisen, sind erfindungsgemäß ausgenommen.

Die erfindungsgemäßen thermoplastischen Formmassen enthalten als Komponente A mindestens ein thermoplastisches Matrixpolymer, ausgewählt aus Polyamiden, Polyestern, Polyacetalen und Polysulfonen, die auch als Polymerblend vorliegen können.

Bevorzugt kann erfindungsgemäß mindestens ein Polyamid, Copolyamid oder Polyamid enthaltender Polymerblend als Komponente A eingesetzt werden.

Die erfindungsgemäß eingesetzten Polyamide werden durch Umsetzung von Ausgangsmonomeren hergestellt, die beispielsweise ausgewählt sind aus Dicarbonsäuren und Diaminen oder Salzen aus den Dicarbonsäuren und Diaminen, aus Aminocarbonsäuren, Aminonitrilen, Lactamen und Gemischen davon. Es kann sich dabei um Ausgangsmonomere von beliebigen Polyamiden handeln, beispielsweise von aliphatischen, teilaromatischen oder aromatischen Polyamiden. Die Polyamide können amorph, kristallin oder teilkristallin sein. Die Polyamide können ferner beliebige geeignete Viskositäten bzw. Molekulargewichte aufweisen. Besonders geeignet sind Polyamide mit aliphatischem, teilkristallinem oder teilaromatischem, sowie amorphem Aufbau jeglicher Art.

Solche Polyamide weisen im allgemeinen eine Viskositätszahl von 90 bis 350, vorzugsweise 110 bis 240 ml/g auf, bestimmt in einer 0,5 gew.%-igen Lösung in 96 gew.-%-iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt. Beispiele hierfür sind Polyamide, die sich von Lactamen mit 7 bis 11 Ringgliedern ableiten, wie Polycaprolactam und Polycapryllactam, sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien Adipinsäure, Azelainsäure, Sebacinsäure, Dodecandisäure (= Decandicarbonsäure) und Terephthal- und/oder Isophthalsäure als Säuren genannt.

Als Diamine eignen sich besonders Alkandiamine mit 2 bis 12, insbesondere 6 bis 8 Kohlenstoffatomen sowie m-Xylylendiamin, Di-(4-aminophenyl)methan, Di- (4-amino-cyclohexyl)-methan, 2,2-Di-(aminophenyl)-propan oder 2,2-Di-(4-aminocyclohexyl)-propan sowie p-Phenylendiamin.

Bevorzugte Polyamide sind Polyhexamethylenadipinsäureamid (PA 66) und Polyhexamethylensebacinsäureamid (PA 610), Polycaprolactam (PA 6) sowie Copolyamide 6/66, insbesondere mit einem Anteil von 5 bis 95 Gew.-% an Caprolactam-Einheiten. PA 6, PA 66 und Copolyamide 6/66 sind besonders bevorzugt.

Außerdem seien auch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weitere Beispiele sind Polyamide, die durch Copolymerisation zweier oder mehrerer der vorgenannten Monomeren erhältlich sind, oder Mischungen mehrerer Polyamide, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Die Herstellung der teilaromatischen Copolyamide mit niedrigem Triamingehalt kann nach den in den EP-A 129 195 und 129 196 beschriebenen Verfahren erfolgen. Für teilaromatische Polyamide kann ferner auf WO 2008/074687 verwiesen werden.

Die nachfolgende nicht abschließende Aufstellung enthält die genannten, so wie weitere Polyamide im Sinne der Erfindung (in Klammern sind die Monomeren angegeben):
PA 26 (Ethylendiamin, Adipinsäure)
PA 210 (Ethylendiamin, Sebacinsäure)
PA 46 (Tetramethylendiamin, Adipinsäure)
PA 66 (Hexamethylendiamin, Adipinsäure)
PA 69 (Hexamethylendiamin,Azelainsäure)
PA 610 (Hexamethylendiamin, Sebacinsäure)
PA 612 (Hexamethylendiamin, Decandicarbonsäure)
PA 613 (Hexamethylendiamin, Undecandicarbonsäure)
PA 1212 (1,12-Dodecandiamin, Decandicarbonsäure)
PA 1313 (1,13-Diaminotridecan, Undecandicarbonsäure)
PA MXD6 (m-Xylylendiamin, Adipinsäure)
PA TMDT (Trimethylhexamethylendiamin, Terephthalsäure)
PA 4 (Pyrrolidon)
PA 6 (ε-Caprolactam)
PA 7 (ε-Amino-Oenanthsäure)
PA 8 (Capryllactam)
PA 9 (9-Aminononansäure)
PA11 (11-Aminoundecansäure)
PA12 (Laurinlactam)
Polyphenylendiaminterephthalamid (p-Phenylendiamin, Terephthalsäure)

Diese Polyamide und ihre Herstellung sind bekannt. Einzelheiten zu ihrer Herstellung findet der Fachmann in Ullmanns Enzyklopädie der Technischen Chemie, 4. Auflage, Bd. 19, S. 39-54, Verlag Chemie, Weinmann 1980, sowie Ullmanns Encyclopedia of Industrial Chemistry, Vol. A21, S. 179-206, VCH Verlag, Weinheim 1992, sowie Stoeckhert, Kunststofflexikon, S. 425-428, Hanser Verlag München 1992 (Stichwort "Polyamide" und folgende).

Besonders bevorzugt werden Polyamid-6, Polyamid-66 oder MXD6-Polyamid (Adipinsäure/m-Xylylendiamin) eingesetzt.

Zudem ist es erfindungsgemäß möglich, funktionalisierende Verbindungen in den Polyamiden vorzusehen, die zur Anbindung an Carboxyl- oder Aminogruppen befähigt sind und die z. B. mindestens eine Carboxyl-, Hydroxyl- oder Aminogruppe aufweisen. Dabei handelt es sich vorzugsweise um

verzweigend wirkende Monomere, die z. B. mindestens drei Carboxyl- oder Aminogruppen aufweisen,

Monomere, die zur Anbindung an Carboxyl- oder Aminogruppen befähigt sind, z. B. durch Epoxy-, Hydroxy-, Isocyanato-, Amino- und/oder Carboxylgruppen, und funktionelle Gruppen aufweisen, ausgewählt aus Hydroxyl-, Ether-, Ester-, Amid-, Imin-, Imid-, Halogen-, Cyano- und Nitrogruppen, C-C-Doppel- oder -Dreifachbindungen,

oder um Polymerblöcke, die zur Anbindung an Carboxyl- oder Aminogruppen befähigt sind, beispielsweise um Poly-p-aramidoligomere.

Durch den Einsatz der funktionalisierenden Verbindungen kann das Eigenschaftsspektrum der hergestellten Polyamide in weiten Bereichen frei eingestellt werden.

Beispielsweise können Triacetondiamin-Verbindungen als funktionalisierende Monomere eingesetzt werden. Es handelt sich dabei vorzugsweise um 4-Amino-2,2,6,6-tetramethylpiperidin oder 4-Amino-1-alkyl-2,2,6,6-tetramethylpiperidin, in denen die Alkylgruppe 1 bis 18 C-Atome aufweist oder durch eine Benzylgruppe ersetzt ist. Die Triacetondiamin-Verbindung ist in einer Menge von vorzugsweise 0,03 bis 0,8 mol-%, besonders bevorzugt 0,06 bis 0,4 mol-%, jeweils bezogen auf 1 Mol Säureamid-Gruppen des Polyamids, vorhanden. Für eine weitere Beschreibung kann auf die DE-A-44 13 177 verwiesen werden.

Als weitere funktionalisierende Monomere können auch die üblicherweise als Regler eingesetzten Verbindungen wie Monocarbonsäuren und Dicarbonsäuren verwendet werden. Für eine Beschreibung kann ebenfalls auf die DE-A-44 13 177 verwiesen werden.

Komponente A kann neben einem oder mehreren Polyamiden oder Copolyamiden auch mindestens ein weiteres Blendpolymer enthalten. Dabei beträgt der Anteil des Blendpolymers an Komponente A vorzugsweise 0 bis 60 Gew.-%, besonders bevorzugt 0 bis 50 Gew.-%, insbesondere 0 bis 40 Gew.-%. Beim Vorliegen des Blendpolymers beträgt seine Mindestmenge vorzugsweise 5 Gew.-%, besonders bevorzugt mindestens 10 Gew.-%.

Als Blendpolymer können beispielsweise natürliche oder synthetische Kautschuke, Acrylat-Kautschuke, Polyester, Polyolefine, Polyurethane oder Gemische davon eingesetzt werden, gegebenenfalls in Kombination mit einem Verträglichkeitsvermittler.

Als einsetzbare synthetische Kautschuke können Ethylen-Propylen-Dien-Kautschuk (EPDM), Styren-Butadien-Kautschuk (SBR), Butadien-Kautschuk (BR), NitrilKautschuk (NBR), Hydrin-Kautschuk (ECO), Acrylat-Kautschuke (ASA) genannt werden. Auch Silikon-Kautschuke, Polyoxyalkylen-Kautschuke und andere Kautschuke sind einsetzbar.

Als thermoplastische Elastomere können thermoplastisches Polyurethan (TPU), StyrolButadien-Styrol-Blockcopolymere (SBS), Styrol-Isopren-Styrol-Blockcopolymere (SIS), Styrol-Ethylen-Butylen-Styrol-Blockcopolymere (SEBS) oder Styrol-Ethylen-Propylen-Styrol-Blockcopolymere (SEPS) benannt werden.

Ferner können Harze als Blendpolymere eingesetzt werden, etwa Urethanharze, Acrylharze, Fluorharze, Silikonharze, Imidharze, Amidimidharze, Epoxyharze, Ureaharze, Alkydharze oder Melaminharz.

Als Blendpolymer kommen ferner Ethylencopolymerisate in Betracht, beispielsweise Copolymere aus Ethylen und 1-Octen, 1-Buten oder Propylen, wie sie in der WO 2008/074687 beschrieben sind. Die Molekulargewichte derartiger Ethylen-α-Olefin-Copolymere liegen vorzugsweise im Bereich von 10.000 bis 500.000 g/mol, bevorzugt zwischen 15.000 und 400.000 g/mol (Zahlenmittel des Molekulargewichts). Es können auch reine Polyolefine wie Polyethylen oder Polypropylen eingesetzt werden.

Für geeignete Polyurethane kann auf EP-B-1 984 438, DE-A-10 2006 045 869 und EP-A-2 223 904 verwiesen werden.

Weitere geeignete thermoplastische Harze sind in der JP-A-2009-155436 in Absatz [0028] aufgeführt.

Alternativ können als Komponente A auch Polyester, Polyacetale und Polysulfone eingesetzt werden.

In Polyestern können beliebige geeignete Dicarbonsäure mit beliebigen geeigneten Diolen umgesetzt sein. Umsetzbare Dicarbonsäuren sind beispielsweise Oxalsäure, Malonsäure, Bernsteinsäure, Glutarsäure, Adipinsäure, Pimelinsäure, Korksäure, Azelainsäure, Sebacinsäure, Undecan-alpha,omega-dicarbonsäure, Dodecan-alpha,omega-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure sowie cis- und trans-Cyclopentan-1,3-dicarbonsäure. Diese Dicarbonsäuren können auch in substituierter Form eingesetzt werden. Beispielhaft können 2-Methylmalonsäure, 2-Ethylmalonsäure, 2-Phenylmalonsäure, 2-Methylbernsteinsäure, 2-Ethylbernsteinsäure, 2-Phenylbernsteinsäure, Itaconsäure, 3,3-Dimethylglutarsäure genannt werden.

Ferner sind auch ethylenisch ungesättigte Säuren, wie Maleinsäure oder Fumarsäure sowie aromatische Dicarbonsäuren, wie Phthalsäure, Isophthalsäure oder Terephthalsäure einsetzbar.

Besonders bevorzugt setzt man Bernsteinsäure, Glutarsäure, Adipinsäure, Phthalsäure, Isophthalsäure, Terephthalsäure oder deren Mono- oder Dimethylester ein.

Als Diole verwendet man beispielsweise Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5- diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8- Octandiol, 1,2-Octandiol, 1,9-Nonandiol, 1,10-Decandiol, 1,2-Decandiol, 1,12-Dodecandiol, 1,2-Dodecandiol, 1,5-Hexadien-3,4-diol, Cyclopentandiole, Cyclohexandiole, Inositol und Derivate, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole HO(CH₂CH₂O)ₙ-H oder Polypropylenglykole HO(CH[CH₃]CH₂O)ₙ-H oder Gemische von zwei oder mehr Vertretern der voranstehenden Verbindungen, wobei n eine ganze Zahl ist und n = 4 bis 25 beträgt. Dabei kann eine oder auch beide Hydroxylgruppen in den vorstehend genannten Diolen auch durch SH-Gruppen substituiert werden. Bevorzugt sind Ethylenglykol, Propan-1,2-diol sowie Diethylenglykol, Triethylenglykol, Dipropylenglykol und Tripropylenglykol.

Die Polyester haben vorzugsweise ein gewichtsmittleres Molekulargewicht von 500 bis 50.000 g/mol.

Erfindungsgemäß einsetzbare Polyacetale sind insbesondere Polyoxymethylen-Homopolymere und Polyoxymethylen-Copolymere. Auch andere Polyacetale sind erfindungsgemäß einsetzbar.

Erfindungsgemäß eingesetzte Polysulfone sind vorzugsweise aromatische Polysulfone.

Für Blendpolymere kann auf die vorstehend bei den Polyamiden beschriebenen Blendpolymere verwiesen werden. Dabei gelten auch die dort angegebenen Gewichtsanteile für die Blendpolymere.

Gemäß einer Ausführungsform der Erfindung ist Komponente A ein Polyamid und Komponente B ist ein hoch- oder hyperverzweigtes Polyethylenimin oder ein hoch- oder hyperverzweigtes Polyetheramin.

Gemäß einer weiteren Ausführungsform der Erfindung ist Komponente A ein Polyester und Komponente B ist ein hoch- oder hyperverzweigtes Polycarbonat oder ein hoch- oder hyperverzweigter Polyester.

Als Komponente C enthalten die thermoplastischen Formmassen 0,1 bis 15 Gew.-% leitfähige Kohlenstoff-Füllstoffe, die ausgewählt sind aus Kohlenstoff-Nanoröhren, Graphenen, Ruß (insbesondere Leitfähigkeitsruß), Graphit oder Gemischen davon. Kohlenstoff-Nanoröhren, Graphene oder Gemische davon sind vorzugsweise in einer Menge von 0,1 bis 7 Gew.-%, bezogen auf die thermoplastische Formmasse, in dieser enthalten.

Geeignete Kohlenstoff-Nanoröhren und Graphene sind dem Fachmann bekannt. Für eine Beschreibung geeigneter Kohlenstoff-Nanotubes (CNT) kann auf DE-A-102 43 592, insbesondere die Absätze [0025] bis [0027] verwiesen werden, ferner auf EP-A-2 049 597, insbesondere auf Seite 16, Zeilen 11 bis 41, oder auf DE-A-102 59 498, Absätze [0131] bis [0135]. Ferner sind geeignete Carbon Nanotubes beschrieben in WO 2006/026691, Absätze [0069] bis [0074]. Geeignete Kohlenstoff-Nanotubes sind ferner in WO 2009/000408, Seite 2, Zeile 28 bis Seite 3, Zeile 11, beschrieben.

Im Rahmen der vorliegenden Erfindung versteht man unter Carbon-Nanotubes kohlenstoffhaltige Makromoleküle, in denen der Kohlenstoff (hauptsächlich) Graphitstruktur aufweist und die einzelnen Graphitschichten schlauchförmig angeordnet sind. Nanotubes sowie deren Synthese sind in der Literatur bereits bekannt (beispielsweise J. Hu et al., Acc. Chem. Res. 32 (1999), 435 - 445). Im Rahmen der vorliegenden Erfindung kann grundsätzlich jegliche Art von Nanotubes eingesetzt werden.

Vorzugsweise beträgt der Durchmesser der einzelnen schlauchförmigen Graphitschichten (Graphitschläuche) 4 bis 20 nm, insbesondere 5 bis 10 nm. Nanotubes lassen sich prinzipiell in sogenannte Single walled nanotubes (SWNTs; "einwändige" Nanotubes) und multiwalled nanotubes (MWNTs; "mehrwändige" Nanotubes) unterscheiden. In den MWNTs sind somit mehrere Graphitschläuche übereinander gestülpt. Ferner kann die äußere Form der Schläuche variieren, diese kann einen gleichförmigen Durchmesser innen und außen aufweisen, es sind aber auch knotenförmige Schläuche und wurmähnliche Strukturen (vermicular) herstellbar.

Das Aspektverhältnis (Länge des jeweiligen Graphitschlauches zu dessen Durchmesser) beträgt mindestens > 10, vorzugsweise > 5. Die Nanotubes haben eine Länge von mindestens 10 nm. Im Rahmen der vorliegenden Erfindung werden als Komponente B) MWNTs bevorzugt. Insbesondere weisen die MWNTs ein Aspektverhältnis von ca. 1.000 : 1 sowie eine Durchschnittslänge von ungefähr 10.000 nm auf.

Die spezifische Oberfläche gemäß BET beträgt in der Regel 50 bis 2000 m²/g, vorzugsweise von 200 bis 1200 m²/g. Die bei der katalytischen Herstellung entstehenden Unreinheiten (z. B. Metalloxide) betragen in der Regel gemäß HRTEM von 0,1 bis 12 %, vorzugsweise von 0,2 bis 10 %.

Geeignete Nanotubes können unter der Bezeichnung "multiwall" von der Firma Hyperion Catalysis Int., Cambridge MA (USA) bezogen werden (siehe auch EP 205 556, EP 969 128, EP 270 666, US 6,844,061).

Geeignete Graphene sind beispielsweise beschrieben in Macromolecules 2010, 43, Seiten 6515 bis 6530.

Die erfindungsgemäßen thermoplastischen Formmassen können ferner weitere Zusatzstoffe wie weitere Füllstoffe, z. B. Glasfasern, Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten: Typischerweise liegen diese weiteren Zusatzstoffe in Mengen von 0 bis 50 Gew.-%, vorzugsweise 0 bis 35 Gew.-% vor. Für eine nähere Beschreibung möglicher Zusatzstoffe kann auf die WO 2008/074687, Seiten 31 bis 37 verwiesen werden.

Die Erfindung betrifft auch ein Verfahren zur Herstellung der vorstehend beschriebenen thermoplastischen Formmassen durch Vermischen der Komponenten, vorzugsweise in einem Extruder.

Die Herstellung der erfindungsgemäßen thermoplastischen Formmassen erfolgt z. B. durch Extrusionsverfahren bei für die Thermoplastverarbeitung üblichen Temperaturen. Es kann beispielsweise ein wie in DE-A-10 2007 029 008 beschriebenes Verfahren zum Einsatz kommen. Ferner kann für die Herstellung auf WO 2009/000408 verwiesen werden.

Die Herstellung erfolgt vorzugsweise in einem gleichläufigen Doppelschneckenextruder, in dem die Komponenten B und C in Komponente A eingebracht werden.

Die Komponente C kann als Pulver oder in Form eines Masterbatch in thermoplastische Formmasse eingebracht werden. Die Zuführung der Komponente B kann unabhängig von der Zuführung des leitfähigen Füllstoffs der Komponente C erfolgen, beispielsweise im "hot feed" des Extruders. Alternativ kann ein Komponente B enthaltender Masterbatch eingesetzt werden. Es können auch Komponenten B und C vermischt zugesetzt werden.

Die Weiterverarbeitung der thermoplastischen Formmasse kann nach bekannten Verfahren erfolgen, beispielsweise durch Spritzgießen oder Formpressen.

Das erfindungsgemäße Verfahren erlaubt die Herstellung von mit den Kohlenstoff-Füllstoffen der Komponente C gefüllten thermoplastischen Formmassen mit geringem Energieaufwand bei guten Dispersionsgraden.

Durch die erfindungsgemäße Herstellung werden die thermoplastischen Formmassen bzw. daraus hergestellte Formkörper antistatisch oder leitfähig. Unter "antistatisch" werden Volumenwiderstände von 10⁹ bis 10⁸ Ohm cm verstanden. Unter "leitfähig" werden Volumenwiderstände von weniger als 10⁶ Ohm cm verstanden.

Die erfindungsgemäßen thermoplastischen Formmassen werden insbesondere zur Herstellung von leitfähigen Formkörpern eingesetzt.

Die Erfindung betrifft auch Formkörper aus der vorstehend beschriebenen thermoplastischen Formmasse.

Die Erfindung wird durch die nachstehenden Beispiele näher erläutert.

### Beispiele:

Zur Herstellung der thermoplastischen Formmasse wurden folgende Einsatzstoffe verwendet:
Thermoplastische Matrix:
   A1: Polyamid-6 mit einer Viskositätszahl (VN) von 150 ml/g
   A2: Polyamid-6 mit einer Viskositätszahl (VN) von 170 ml/g
   A3: Polybutylenterephthalat (PBT) mit einer Viskositätszahl (VN) von 130 ml/g
   A4: unmodifiziertes LDPE mit einer Dichte (ISO 1183) von 0,923 g/cm³, Shore D Härte (ISO 868) von 48 und einer Schmelzfließrate (MFR; ISO 1133) von 0,75 g/10 min (190 °C, 2,16 kg) (Lupolen^{®} A 2420 F)
Leitfähige Füllstoffe:
   C1: Leitruß Printex XE2B von Evonik
   C2: Graphen Masterbatch (9 %) hergestellt mit Vorbeck-Graphit
   C3: Kohlenstoff-Nanoröhren in Form eines 15 gew.-%igen Masterbatches in Polyamid-6 aus Nanocyl NC 7000
   C4: Kohlenstoff-Nanoröhren in Form eines 15 gew.-%igen Masterbatches in Polybutylenterephthalat aus Nanocyl NC 7000
Hyperverzweigte Polymere:
   B1: Polyethylenimin mit einem Gewichtsmittel des Molekulargewichts von 25.000, einem pH-Wert von 11, einer Viskosität von 350 Pa s bei 20 °C und einem Verhältnis von primären/sekundären/tertiären Aminen von 1/1,20/0,76 (Lupasol^{®} WF der BASF SE)
   B2: Polyethylenimin mit einem Gewichtsmittel des Molekulargewichts von 1.300 g/mol, einem pH-Wert von 11, einer Viskosität von 20.000 Pa s bei 20 °C und einem Verhältnis von primären/sekundären/tertiären Aminen von 1/0,91/0,64 (Lupasol^{®} G20 von BASF SE)
   B3: Hyperverzweigtes Polycarbonat, das wie folgt hergestellt wurde:
      Der mehrfunktionelle Alkohol, Diethylcarbonat und 0,15 Gew.-% Kaliumcarbonat als Katalysator (Menge bezogen auf Menge Alkohol) wurden nach den Ansatzmengen gemäß Tabelle 1 in einem Dreihalskolben, ausgestattet mit Rührer, Rückflusskühler und Innenthermometer vorgelegt, die Mischung auf 140 °C erwärmt, und 2 h bei dieser Temperatur gerührt. Mit fortschreitender Reaktionsdauer reduzierte sich dabei die Temperatur des Reaktionsgemisches bedingt durch die einsetzende Siedekühlung des freigesetzten Ethanols. Nun wurde der Rückflusskühler gegen einen absteigenden Kühler getauscht, bezogen auf die Äquivalentmenge Katalysator ein Äquivalent Phosphorsäure zugegeben, Ethanol abdestilliert und die Temperatur des Reaktionsgemisches langsam bis auf 160 °C erhöht. Der abdestillierte Alkohol wurde in einem gekühlten Rundkolben gesammelt, ausgewogen und der Umsatz so gegenüber dem theoretisch möglichen Vollumsatz prozentual ermittelt (siehe Tabelle 0).

Anschließend wurde bei 160 °C über einen Zeitraum von 1 h trockener Stickstoff durch das Reaktionsgemisch geleitet, um noch vorhandene Restmengen von Monomeren zu entfernen. Danach wurde das Reaktionsgemisch auf Raumtemperatur abgekühlt.

Analytik der erfindungsgemäßen Polycarbonate: Die Polycarbonate wurden per Gelpermeationschromatographie mit einem Refraktometer als Detektor analysiert. Als mobile Phase wurde Dimethylacetamid verwendet, als Standard zur Bestimmung des Molekulargewichts wurde Polymethylmethacrylat (PMMA) eingesetzt.

Die Bestimmung der OH-Zahl erfolgte nach DIN 53240, Teil 2.

**Tabelle 0 : Einsatzstoffe und Endprodukte**

| Bsp. Nr. | Alkohol | Molverhältnis Alkohol zu Carbonat | Destillat, AlkoholMenge bez. auf Vollumsatz mol-% | Molekulargewicht Produkt (g/mol) Mw Mn | OH-Zahl Produkt (mg KOH/g) nach DIN 53240, Teil 2 |
|---|---|---|---|---|---|
| 1 | TMP x | 1:1 | 72 | 2300 | 400 |
| | 1,2 PO | | | 1500 | |

| | | | | | |
|---|---|---|---|---|---|
| TMP = Trimethylolpropan PO = Propylenoxid | | | | | |

Die Bezeichnung "TMP x 1,2 PO" beschreibt darin ein Produkt, das je mol Trimethylolpropan mit durchschnittlich 1,2 mol Propylenoxid umgesetzt worden ist.

### Charakterisierungsmethoden:

Die Viskositätszahl des Polyamids VN wurde nach ISO 307 in einer 0,5 gew.%-igen Lösung in 96 gew.-%-iger Schwefelsäure bei 25 °C bestimmt.

Die MFR von Polyethylen wurde nach ISO 1133 bei 190 °C unter einer Last von 2,16 kg bestimmt.

### Volumenausschluss-Chromatografie (SEC):

Die Größenausschluss-Chromatografie basierte auf einem Agilent 1100 (Konzentrationsdetektor (DRI), Entgaser, UV und Pumpe) mit einem Lichtstreuungsdetektor (Dawn EUS). Hexafluorisopropanol (HFIP) wurde als Lösungsmittel verwendet mit 0,05 Gew.-% Kaliumtrifluoracetat bei 1,0 mL/min. Die Säulen (Vorsäule PL HFIPgel und HTS PL HFIPgel von Polymer Laboratories, 4,6 mm) wurden auf 40 °C in einem Säulenofen thermostatisiert. In jedem Durchlauf wurden 25 µL eingespritzt mit einer Konzentration von etwa 1,5 mg/mL. Alle Proben wurden vor dem Einspritzen filtriert (Millipore Millex FG Porendurchmesser 0,2 µm).

Die elektrische Leitfähigkeit wurde als Volumenleitfähigkeit unter Verwendung einer 4-Punktmessapparatur gemessen. Für jede Platte wurde die Messung an fünf Proben der Dimensionen 77 x 12 x 4 mm³ durchgeführt, die aus gehärteten Platten ausgesägt wurden. Um einen guten Kontakt zwischen Probe und Elektroden zu erreichen, wurden vier Silberelektroden direkt auf die Probe gemalt unter Verwendung einer leitfähigen Silberpaste (Leitsilber 200 von Hans Wohlbring GmbH). Als Stromquelle wurde 225 Current Source, als Spannungsmessgerät 617 Programmable Electrometer und als Strommessgerät 1000 Multimeter, jeweils Keithley Instruments, eingesetzt.

### Methode 1:

Zur Herstellung der Formmassen wurden die Masterbatches mit Polyamid-6 verdünnt und mit den anderen zur Compoundierung in einen Extruder DSM 15 eingeführt. Die Extrusion erfolgte bei einer Schmelztemperatur von 270 °C, einer Umdrehungsgeschwindigkeit von 80 U/min und einer Verweilzeit von 5 Minuten. Die Proben wurden dann als Platten mit den Maßen 30 x 30 x 1,27 mm³ für die Leitfähigkeitsmessung spritzgegossen. Die Herstellung der spritzgegossenen Platten erfolgte auf einer Xplor Formmaschine 12 mL bei einer Schmelztemperatur von 270 °C, einer Formtemperatur von 80 °C, einem Einspritzdruck von 12 bis 16 bar und einer Wiederholzeit von 15 Sekunden. Die Zusammensetzung der Formmassen und der ermittelte Volumenwiderstand sind in der nachfolgenden Tabelle 1 zusammengefasst.

Zur Herstellung von gepressten Proben (30 x 31 x 1,6 mm³) wurde das Extrudat gesammelt, für 4 Minuten bei 270 °C unter 20 bis 30 bar aufgeschmolzen, für 2 Minuten bei 270 °C unter 200 bar komprimiert. Die Proben wurden dann unter 200 bar auf Raumtemperatur abgekühlt.

### Methode 2:

Verarbeitung mit einem co-rotierendem Doppelschraubenextruder

Die Herstellung der Kohlenstoff-gefüllten Formmassen erfolgte mit einem Extruder ZSK von Coperion mit einem Schraubendurchmesser von 18 mm. Der Extruder wies 11 Zonen auf, wobei das Polymer in den Zonen 0 und 1 kalt eingefüllt wurde. Die Zonen 2 und 3 dienten dem Aufschmelzen und Transportieren. In Zone 4 wurde das hyperverzweigte Polymer über einen HotFeed zudosiert. Die nachfolgenden Zonen 5 und 6 dienten der Dispergierung, wobei ein Teil der Zone 6 zusammen mit Zone 7 auch der Homogenisierung diente. In den Zonen 8 und 9 wurde eine Redispergierung durchgeführt. Es folgten eine Zone 10 zur Entgasung und Zone 11 zum Austrag.

Der Eintrag des hyperverzweigten Polymers in Zone 4 erfolgte unter Verwendung einer Getriebepumpe. Der Extruderdurchsatz wurde auf 5 kg/h eingestellt, und die Schraubengeschwindigkeit wurde mit 400 U/min konstant gehalten. Die Extrusionstemperatur betrug 260 °C. Die Produkte wurden granuliert und durch Spritzgießen weiterverarbeitet. Das Spritzgießen erfolgte auf einer Arburg 420C bei einer Schmelzetemperatur von 260 °C und einer Formtemperatur von 80 °C.

### Reaktivität von Komponente B mit Komponente A

Zur Bestimmung der Reaktivität der Komponente B mit Komponente A wurde eine Molekulargewichtsbestimmung nach 2 Minuten, nach 6 Minuten und nach 17 Minuten durchgeführt. Die Herstellung erfolgte nach Methode 1. Die Verweilzeit im Extruder wurde dabei variiert. Die Ergebnisse sind in der nachstehenden Tabelle 1 zusammengefasst:

**Tabelle 1:**

| Probe | A | | B | | Mw | Mw | Mw |
|---|---|---|---|---|---|---|---|
| | | | | | bei 2 min | bei 6 min | bei 17 min |
| | A1 | A2 | B1 | B2 | Da | Da | Da |
| Ref. 1 | 100 | | | | 31500 | 31600 | 31900 |
| Ref. 2 | | 100 | | | 36000 | 36500 | 36700 |
| Ex. 1 | 99 | | 1 | | 29800 | 40900 | 47400 |
| Ex. 2 | 99 | | | 1 | 28500 | 32600 | 38400 |
| Ex. 3 | | 99 | 1 | | 34900 | 44900 | 63700 |
| Ex. 4 | | 99 | | 1 | 33200 | 34800 | 34800 |

Während sich für die reinen Polyamide die Molekulargewichte kaum änderten, konnte für die Gemische der Beispiele 1 bis 4 ein kontinuierlicher Molekulargewichtsanstieg festgestellt werden. Dies zeigt, dass die Komponente B mit Komponente A reaktionsfähig ist. Zunächst nahm das Molekulargewicht durch Zusatz der Komponente B ab, stieg aber in weniger als 3 Minuten wieder an.

### Effekt unterschiedlicher Füllstoffe

Ausgehend von den Komponenten A1 und B1 wurden unterschiedliche leitfähige Füllstoffe C1, C2 und C3 eingesetzt. Die Herstellung erfolgte nach Methode 1. Es wurden jeweils Formmassen verglichen, die Komponente B enthielten oder nicht. Für die Formmassen, die Komponente B enthielten, war die Volumenleitfähigkeit jeweils besser. Die Ergebnisse sind in der nachstehenden Tabelle 2 zusammengefasst:

**Tabelle 2:**

| Probe | A | | C | | | | B | | Volumenwiderstand |
|---|---|---|---|---|---|---|---|---|---|
| | Gew.-% | | Gew.-% | | | | Gew.% | | (Ohm cm) |
| Ref. 3 | A1 | 95 | C1 | 5 | | | | | 5,5E+11 |
| Ex. 5 | A1 | 94 | C1 | 5 | | | B1 | 1 | 2,7E+04 |
| Ref. 4 | A1 | 95 | C2 | | 5 | | | | 3,7E+04 |
| Ex. 6 | A1 | 94 | C2 | | 5 | | B1 | 1 | 8,7E+03 |
| Ref. 5 | A1 | 97 | C3 | | | 3 | | | 2,2E+08 |
| Ex. 7 | A1 | 96 | C3 | | | 3 | B1 | 1 | 2,8E+03 |

| | | | | | | | | | |
|---|---|---|---|---|---|---|---|---|---|
| Volumenwiderstand für Formkörper, die durch Kompressionsformen und Injektion hergestellt wurden (nach Methode 2) | | | | | | | | | |

Die Volumenwiderstände sind in der nachstehenden Tabelle 3 zusammengefasst.

**Tabelle 3:**

| Probe | A | | C | | B | | Volumenwiderstand | |
|---|---|---|---|---|---|---|---|---|
| | Gew.-% | | Gew.-% | | Gew.-% | | (Ohm cm) | |
| | | | | | | | Injektion | Kompression |
| Ref. 6 | A1 | 97 | C3 | 3 | | | 1,73E+02 | 9,2E+00 |
| Ex. 8 | A1 | 94 | C3 | 3 | B1 | 3 | 1,21E+03 | 1,1E+01 |
| Ex. 9 | A1 | 94 | C3 | 3 | B2 | 3 | 9,27E+02 | 9,3E+00 |
| Ex. 10 | A1 | 96 | C3 | 3 | B1 | 1 | 2,26E+03 | 1.0E+01 |
| Ex. 11 | A1 | 96 | C3 | 3 | B2 | 1 | 7,95E+10 | 7,03E+03 |

Die Volumenwiderstände für die durch Kompression erhaltenen Formkörper waren deutlich geringer als die durch Injektion hergestellten Formkörper. Ohne an eine Theorie gebunden zu sein, ist es möglich, dass bei den durch Einspritzen hergestellten Formkörpern eine Längsausrichtung der Füllstoffe erfolgt, so dass eine geringere Netzwerkausbildung auftritt.

### Volumenwiderstand für Polyamidkörper und der Zusatz von Kohlenstoff-Füllstoffen

In den Formmassen und Vergleichsformmassen, deren Volumenwiderstand in der nachfolgenden Tabelle 4 zusammengefasst ist, wurden Formmassen, die Kohlenstoff-Füllstoffe enthielten, mit solchen verglichen, die keine Kohlenstoff-Füllstoffe, dafür aber hyperverzweigte Polymere enthielten. Sie wurden nach Methode 2 hergestellt. Die Ergebnisse sind in Tabelle 4 zusammengefasst:

**Tabelle 4**

| Probe | A | | C | | B | | A4 | | Volumenwiderstand |
|---|---|---|---|---|---|---|---|---|---|
| | Gew.-% | | Gew.-% | | Gew.-% | | Gew.-% | | (Ohm cm) |
| Ref. 7 | A1 | 97 | C3 | 3 | | | | | 2,7E+12 |
| Ref. 8 | A1 | 98 | C3 | 2 | | | | | 1,5E+12 |
| Ref. 9 | A1 | 99 | C3 | 1 | | | | | 1,2E+12 |
| Ex. 12 | A1 | 96,5 | C3 | 3 | B1 | 0,5 | | | 3,7E+04 |
| Ex. 13 | A1 | 97,5 | C3 | 2 | B1 | 0,5 | | | 2,5E+11 |
| Ex. 14 | A1 | 98,5 | C3 | 1 | B1 | 0,5 | | | 1,1E+12 |
| Ex. 15 | A1 | 96,5 | C3 | 3 | B2 | 0,5 | | | 1.0E+05 |
| Ex. 16 | A1 | 97,5 | C3 | 2 | B2 | 0,5 | | | 1,1E+05 |
| Ex. 17 | A1 | 98,5 | C3 | 1 | B2 | 0,5 | | | 7,4E+08 |
| Ex. 18 | A1 | 77 | C3 | 3 | | | A4 | 30 | 1,9E+07 |
| Ex. 19 | A1 | 76 | C3 | 3 | B1 | 1 | A4 | 30 | 8,8E+02 |

Die Kohlenstoff-Füllkörper enthaltenden Formmassen weisen einen erheblich geringeren Volumenwiderstand auf im Vergleich zu den Formmassen, die nur die hyperverzweigten Polymere enthalten.

### Volumenwiderstand für PBT-enthaltende Proben

In der nachstehenden Tabelle 5 sind die Volumenwiderstände für PBT-enthaltende Proben zusammengefasst. Sie wurden nach Methode 2 hergestellt. Dabei werden Proben, die hyperverzweigte Polymere enthalten, mit Proben verglichen, die keine hyperverzweigten Polymere enthalten. Die Ergebnisse sind in Tabelle 5 zusammengefasst:

**Tabelle 5:**

| Probe | A | | C | | B | | Volumenwiderstand |
|---|---|---|---|---|---|---|---|
| | Gew.-% | | Gew.-% | | Gew.-% | | (Ohm cm) |
| Ref. 10 | A3 | 98 | C4 | 2 | | | 6.0E+03 |
| Ex. 20 | A3 | 97 | C4 | 2 | B3 | 1 | 1,7E+03 |
| Ref. 11 | A3 | 99 | C4 | 1 | | | 6,4E+11 |
| Ex. 21 | A3 | 98 | C4 | 1 | B3 | 1 | 1,5E+06 |

Aus den Ergebnissen wird deutlich, dass die erfindungsgemäßen Formmassen jeweils deutlich geringere Volumenwiderstände aufweisen.

## Patentansprüche

1. Thermoplastische Formmasse, enthaltend, bezogen auf die thermoplastische Formmasse,
a) mindestens ein thermoplastisches Matrixpolymer, ausgewählt aus Polyamiden und Polyestern, das auch als Polymerblend vorliegen kann, als Komponente A,
b) 0,1 bis 5 Gew.-% mindestens eines hoch- oder hyperverzweigten Polymers, das funktionelle Gruppen aufweist, die mit dem Matrixpolymer der Komponente A reaktionsfähig sind, als Komponente B,
c) 0,1 bis 15 Gew.-% leitfähige Kohlenstoff-Füllstoffe, ausgewählt aus Kohlenstoff-Nanoröhren, Graphenen, oder Gemischen davon, als Komponente C,
wobei die thermoplastische Formmasse keine amorphen Oxide oder Oxidhydrate mindestens eines Metalls oder Halbmetalls mit einem zahlengewichteten mittleren Durchmesser der Primärpartikel von 0,5 bis 20 nm enthält, und wobei Formmassen ausgenommen sind, die ein teilaromatischen Polyamid und ein Copolymerisat aus Ethylen, 1-Octen oder 1-Buten oder Propylen oder deren Mischungen, sowie funktionellen Monomeren, in denen die funktionelle Gruppe ausgewählt ist aus Carbonsäure, Carbonsäureanhydrid-, Carbonsäureester-, Carbonsäureamid-, Carbonsäureimid-, Amino-, Hydroxyl-, Epoxid-, Urethan- oder Oxazolingruppen, enthalten, **dadurch gekennzeichnet, dass** Komponente A ein Polyamid ist und Komponente B ein hoch- oder hyperverzweigtes Polyethylenimin ist oder Komponente A ein Polyester ist und Komponente B ein hoch- oder hyperverzweigtes Polycarbonat oder ein hoch- oder hyperverzweigter Polyester ist.

2. Thermoplastische Formmasse nach Anspruch 1, **dadurch gekennzeichnet, dass** Komponente B in einer Menge von 0,2 bis 3 Gew.-%, bezogen auf die thermoplastische Formmasse, eingesetzt wird.

3. Thermoplastische Formmasse nach einem der Ansprüche 1 bis 3, **dadurch gekennzeichnet, dass** Komponente A als Blendpolymer natürliche oder synthetische Kautschuke, Acrylatkautschuke, Polyester, Polyolefine, Polyurethane oder Gemische davon enthält, gegebenenfalls in Kombination mit einem Verträglichkeitsvermittler.

4. Thermoplastische Formmasse nach einem der Ansprüche 1 bis 4, **dadurch gekennzeichnet, dass** die Komponente B mit der Komponente A bei Thermoplast-Verarbeitungsbedingungen unter Molekulargewichtsänderung reagiert.

5. Thermoplastische Formmasse nach einem der Ansprüche 1 bis 5, **dadurch gekennzeichnet, dass** die Polyamide in Komponente A ausgewählt sind aus der nachfolgenden Liste, wobei die Ausgangsmonomere in Klammern angegeben sind
PA 26 (Ethylendiamin, Adipinsäure)
PA 210 (Ethylendiamin, Sebacinsäure)
PA 46 (Tetramethylendiamin, Adipinsäure)
PA 66 (Hexamethylendiamin, Adipinsäure)
PA 69 (Hexamethylendiamin,Azelainsäure)
PA 610 (Hexamethylendiamin, Sebacinsäure)
PA 612 (Hexamethylendiamin, Decandicarbonsäure)
PA 613 (Hexamethylendiamin, Undecandicarbonsäure)
PA 1212 (1,12-Dodecandiamin, Decandicarbonsäure)
PA 1313 (1,13-Diaminotridecan, Undecandicarbonsäure)
PA MXD6 (m-Xylylendiamin, Adipinsäure)
PA TMDT (Trimethylhexamethylendiamin, Terephthalsäure)
PA 4 (Pyrrolidon)
PA 6 (ε-Caprolactam)
PA 7 (ε-Amino-Oenanthsäure)
PA 8 (Capryllactam)
PA 9 (9-Aminononansäure)
Poly(p-phenylendiaminterephthalamid) (Phenylendiamin, Terephthalsäure)
PA11 (11-Aminoundecansäure)
PA12 (Laurinlactam)
oder Gemischen oder Copolymeren davon.

6. Verfahren zur Herstellung von thermoplastischen Formmassen nach einem der Ansprüche 1 bis 6 durch Vermischen der Komponenten, vorzugsweise in einem Extruder.

7. Verwendung einer thermoplastischen Formmasse nach einem der Ansprüche 1 bis 6 zur Herstellung von leitfähigen Formkörpern.

8. Formkörper aus einer thermoplastischen Formmasse nach einem der Ansprüche 1 bis 6.

## Claims

1. A thermoplastic molding composition comprising, based on the thermoplastic molding composition,
a) as component A, at least one thermoplastic matrix polymer selected from polyamides and polyesters, where this can also take the form of polymer blend,
b) as component B, from 0.1 to 5% by weight of at least one highly branched or hyperbranched polymer which has functional groups which can react with the matrix polymer of component A, and
c) as component C, from 0.1 to 15% by weight of conductive carbon fillers selected from carbon nanotubes, graphenes, and mixtures thereof,
where the thermoplastic molding composition comprises no amorphous oxides or oxide hydrates of at least one metal or semimetal where the number-average diameter of the primary particles is from 0.5 to 20 nm, with the exclusion of molding compositions which comprise a semiaromatic polyamide and a copolymer made of ethylene, 1-octene, or 1-butene, or propylene, or a mixture of these, and also of functional monomers in which the functional group has been selected from carboxylic acid, carboxylic anhydride groups, carboxylic ester groups, carboxamide groups, carboximide groups, amino groups, hydroxy groups, epoxy groups, urethane groups, and oxazoline groups, wherein component A is a polyamide and component B is a highly branched or hyperbranched polyethyleneimine, or component A is a polyester and component B is a highly branched or hyperbranched polycarbonate or a highly branched or hyperbranched polyester.

2. The thermoplastic molding composition according to claim 1, wherein the amount of component B used is from 0.2 to 3% by weight, based on the thermoplastic molding composition.

3. The thermoplastic molding composition according to any of claims 1 to 3, wherein component A comprises, as blend polymer, natural or synthetic rubbers, acrylate rubbers, polyesters, polyolefins, polyurethanes, or a mixture thereof, optionally in combination with a compatibilizer.

4. The thermoplastic molding composition according to any of claims 1 to 4, wherein component B reacts with component A under thermoplastics-processing conditions, with a change of molecular weight.

5. The thermoplastic molding composition according to any of claims 1 to 5, wherein the polyamides in component A have been selected from the list below, where the starting monomers have been stated between parentheses:
PA 26 (ethylenediamine, adipic acid)
PA 210 (ethylenediamine, sebacic acid)
PA 46 (tetramethylenediamine, adipic acid)
PA 66 (hexamethylenediamine, adipic acid)
PA 69 (hexamethylenediamine, azelaic acid)
PA 610 (hexamethylenediamine, sebacic acid)
PA 612 (hexamethylenediamine, decanedicarboxylic acid)
PA 613 (hexamethylenediamine, undecanedicarboxylic acid)
PA 1212 (1,12-dodecanediamine, decanedicarboxylic acid)
PA 1313 (1,13-diaminotridecane, undecanedicarboxylic acid)
PA MXD6 (m-xylylenediamine, adipic acid)
PA TMDT (trimethylhexamethylenediamine, terephthalic acid)
PA 4 (pyrrolidone)
PA 6 (ε-caprolactam)
PA 7 (ε-aminoenanthic acid)
PA 8 (capryllactam)
PA 9 (9-aminononanoic acid)
poly (p-phenylenediamineterephthalamide) (phenylenediamine, terephthalic acid)
PA11 (11-aminoundecanoic acid)
PA12 (laurolactam)
or a mixture or copolymer thereof.

6. A process for producing thermoplastic molding compositions according to any of claims 1 to 6 via mixing of the components, preferably in an extruder.

7. The use of a thermoplastic molding composition according to any of claims 1 to 6 for producing conductive moldings.

8. A molding made of a thermoplastic molding composition according to any of claims 1 to 6.

## Revendications

1. Masse de moulage thermoplastique, contenant, par rapport à la masse de moulage thermoplastique,
a) au moins un polymère thermoplastique de matrice, choisi parmi les polyamides et les polyesters, qui peut également se trouver sous forme de mélange de polymères, comme composant A,
b) 0,1 à 5% en poids d'au moins un polymère hautement ramifié ou hyperramifié, qui présente des groupes fonctionnels qui sont aptes à une réaction avec le polymère de matrice du composant A, comme composant B,
c) 0,1 à 15% en poids de charges carbonées conductrices, choisies parmi les nanotubes de carbone, les graphènes ou leurs mélanges, comme composant C,
la masse de moulage thermoplastique ne contenant pas d'oxydes amorphes ou d'oxydes hydratés d'au moins un métal ou semi-métal présentant un diamètre numérique moyen des particules primaires de 0,5 à 20 nm, et les masses de moulage, qui contiennent un polyamide partiellement aromatique et un copolymère d'éthylène, de 1-octène ou de 1-butène ou de propylène ou leurs mélanges, ainsi que de monomères fonctionnels dans lesquels le groupe fonctionnel est choisi parmi les groupes acide carboxylique, anhydride d'acide carboxylique, ester d'acide carboxylique, amide d'acide carboxylique, imide d'acide carboxylique, amino, hydroxyle, époxyde, uréthane ou oxazoline, étant exclues, **caractérisée en ce que** le composant A est un polyamide et le composant B est une polyéthylène-imine hautement ramifiée ou hyperramifiée ou le composant A est un polyester et le composant B est un polycarbonate hautement ramifié ou hyperramifié ou un polyester hautement ramifié ou hyperramifié.

2. Masse de moulage thermoplastique selon la revendication 1, **caractérisée en ce que** le composant B est utilisé en une quantité de 0,2 à 3% en poids, par rapport à la masse de moulage thermoplastique.

3. Masse de moulage thermoplastique selon l'une quelconque des revendications 1 à 3, **caractérisée en ce que** le composant A contient, comme polymère mélangé, des caoutchoucs naturels ou synthétiques, des caoutchoucs d'acrylate, des polyesters, des polyoléfines, des polyuréthanes ou leurs mélanges, le cas échéant en combinaison avec un promoteur de compatibilité.

4. Masse de moulage thermoplastique selon l'une quelconque des revendications 1 à 4, **caractérisée en ce que** le composant B réagit avec le composant A, dans des conditions de transformation de thermoplastiques, avec modification du poids moléculaire.

5. Masse de moulage thermoplastique selon l'une quelconque des revendications 1 à 5, **caractérisée en ce que** les polyamides dans le composant A sont choisis parmi la liste suivante, les monomères de départ étant indiqués entre parenthèses
PA 26 (éthylènediamine, acide adipique)
PA 210 (éthylènediamine, acide sébacique)
PA 46 (tétraméthylènediamine, acide adipique)
PA 66 (hexaméthylènediamine, acide adipique)
PA 69 (hexaméthylènediamine, acide azélaïque)
PA 610 (hexaméthylènediamine, acide sébacique)
PA 612 (hexaméthylènediamine, acide décanedicarboxylique)
PA 613 (hexaméthylènediamine, acide undécanedicarboxylique)
PA 1212 (1,12-dodécanediamine, acide décanedicarboxylique)
PA 1313 (1,13-diaminotridécane, acide undécanedicarboxylique)
PA MXD6 (m-xylylènediamine, acide adipique)
PA TMDT (triméthylhexaméthylènediamine, acide téréphtalique)
PA 4 (pyrrolidone)
PA 6 (ε-caprolactame)
PA 7 (ε-amino-acide oenanthique)
PA 8 (caprolactame)
PA 9 (acide 9-aminononanoïque) poly(p-phénylènediamine-téréphtalamide) (phénylènediamine, acide téréphtalique)
PA11 (acide 11-amino-undécanoïque)
PA12 (lauryllactame)
ou leurs mélanges ou copolymères.

6. Procédé pour la préparation de masses de moulage thermoplastiques selon l'une quelconque des revendications 1 à 6 par mélange des composants, de préférence dans une extrudeuse.

7. Utilisation d'une masse de moulage thermoplastique selon l'une quelconque des revendications 1 à 6 pour la production de corps moulés conducteurs.

8. Corps moulés en une masse de moulage thermoplastique selon l'une quelconque des revendications 1 à 6.
